Europäisches Patentamt

European Patent Office

Office européen des brevets

(19)

(11) Veröffentlichungsnummer: **0 230 976**
**A2**

## (12) EUROPÄISCHE PATENTANMELDUNG

(21) Anmeldenummer: **87100767.0**

(22) Anmeldetag: **21.01.87**

(51) Int. Cl.⁴: **C 23 C 24/08**

(30) Priorität: **25.01.86 DE 3602252**

(43) Veröffentlichungstag der Anmeldung:
**05.08.87 Patentblatt 87/32**

(84) Benannte Vertragsstaaten: **CH DE GB LI NL**

(71) Anmelder: **BBC Aktiengesellschaft Brown, Boveri & Cie.**
**Haselstrasse**
**CH-5401 Baden (CH)**

(72) Erfinder: **Harbach, Friedrich, Dr.**
**Bürgerstrasse 2**
**D-6900 Heidelberg 1 (DE)**

(74) Vertreter: **Rupprecht, Klaus, Dipl.-Ing. et al**
**c/o BROWN, BOVERI & CIE AG Postfach 351**
**Zentralbereich Patente**
**D-6800 Mannheim 1 (DE)**

(54) **Verfahren zur Herstellung einer Schutzschicht.**

(57) Die Erfindung bezieht sich auf ein Verfahren zur Herstellung einer Schutzschicht aus einem keramischen Material für Bauteile (1) aus metallischen oder nichtmetallischen Werkstoffen. Der Erfindung liegt die Aufgabe zugrunde, ein Verfahren zur Herstellung einer wirksamen, mechanisch stabilen, haftfesten Schutzschicht aufzuzeigen, die auch in einer korrosiven Hochtemperaturatmosphäre dauerhaft beständig ist. Für die Herstellung der Schutzschicht wird ein pulverförmiges, keramisches Material verwendet, dessen Teilchen wenigstens drei unterschiedliche Größen aufweisen. Das verwendete pulverförmige, keramische Material besteht zu mehr als 40 % aus Aluminiumoxid oder Zirkoniumoxid. Als keramisches Material kann auch ein Gemisch aus Aluminiumoxid und Titanoxid oder Zirkoniumoxid und Siliziumoxid verwendet werden. Die Zusammensetzung des pulverförmigen keramischen Materials wird insbesondere so gewählt, daß das Größenverhältnis der größten Teilchen zu den kleinsten Teilchen kleiner als 20 und das Größenverhältnis der größten Teilchen zu den mittleren Teilchen kleiner als 4 ist. Die mechanische Verbindung zwischen den Teilchen untereinander und dem Bauteil (1) erfolgt durch druckloses Sintern oder heißisostatisches Pressen bei einer Temperatur zwischen 1100 und 1200 C.

2 3 4 5     1

EP 0 230 976 A2

**Beschreibung**

Verfahren zur Herstellung einer Schutzschicht

Die Erfindung bezieht sich auf ein Verfahren zur Herstellung einer Schutzschicht aus einem keramischen Material gemäß dem Oberbegriff des Patentanspruches 1.

Aus der Informationsschrift "Metall 36" (1982), Teil I. Seite 882 ff. sowie Teil II, Seite 1082 ff. sind oxidationsbeständige Bauelemente für Heißgasturbinen und Strahltriebwerke bekannt, die eine keramische Schutzschicht aufweisen, welche mittels Flamm- oder Plasmaspritzen auf die metallischen Bauelemente aufgetragen sind. Durch das Aufbringen dieser Schutzschichten werden die metallischen Bauelemente gegen korrodierende Einflüsse bei hohen Temperaturen geschützt. Der Schutz besteht in der Herabsetzung von unerwünschten chemischen Angriffen auf das Bauelement und/oder in der Absenkung der Temperatur im Oberflächenbereich des Bauelements gegenüber der Temperatur an der Oberfläche der Schutzschicht.

Bei diesem Flamm- oder Plasmaspritzen werden teilgeschmolzene bzw. weitgehend verflüssigte Keramikpartikel auf die Oberfläche des zu schützenden Bauelementes aufgespritzt. Die haftenden Tropfen erstarren und kühlen weiter ab - nach den jeweiligen Prozeßbedingungen - mehr oder weniger langsam. Dabei durchlaufen sie alle eventuell existierenden Phasenumwandlungen des keramischen Werkstoffs. Unter Umständen treten sogar zusätzliche Umwandlungen auf, wenn die keramischen Teilchen der Schutzschicht sich direkt nach ihrem Erstarren nicht im thermodynamisch stabilen Zustand befinden. So bildet sich beim Plasmaspritzen dieser Schichten ebenso wie beim Aufdampfbeschichten aus dem Aluminiumoxid zuerst das η-Aluminiumoxid, das dem γ-Aluminiumoxid ähnlich ist, denn dieses hat ebenso wie das γ-Aluminiumoxid eine geringere Oberflächenenergie als die einzig thermodynamisch stabile Aluminiumoxidmodifikation, das α-Alumininiumoxid, auch Korund genannt.

Eine später eintretende Umwandlung der keramischen Schicht in die stabile Korundstruktur führt wegen der damit immer verbundenen Volumenabnahme um 8 % zu inneren Spannungen, schließlich zu Rissen und gar zum Abplatzen der Schutzschicht. Zudem zeigen die bis jetzt bekannten keramischen Schutzschichten auf der Basis von Aluminiumoxid nur eine sehr geringe Temperaturwechselbeständigkeit.

Vergleichbare Probleme treten bei der Verwendung von Materialien auf, die Aluminiumoxid/Titanoxid-Gemische oder Zirkoniumoxid ($ZrO_2$)/Siliziumoxid ($SiO_2$)-Gemische enthalten.

Bei der Bildung einer Schutzschicht aus Zirkonoxid werden bei den bekannten Verfahren Stabilisatoren wie Yttriumoxid ($Y_2O_3$), Magnesiumoxid (MgO) oder Kalziumoxid (CaO) zugegeben, um die kubische oder tetragonale Hochtemperaturphase bis zum Abkühlen auf Raumtemperatur zu stabilisieren. Schutzschichten aus derart stabilisiertem Zirkoniumoxid haben sich bisher in vielen Fällen bewährt. Von Nachteil ist es jedoch, daß solche Stabilisatoren in korrosiver Hochtemperaturatmosphäre angegriffen werden, wodurch das kubische oder tetragonale Gitter des keramischen Werkstoffs destabilisiert und in ein monoklines Gitter umgewandelt wird. Durch diese Umwandlung erfolgt eine erhebliche Minderung der mechanischen Stabilität der Zirkoniumoxidschicht, wodurch es zum Abplatzen derselben kommt.

Diese oben genannten Probleme haben die Verwendung keramischer Werkstoffe im Hochtemperaturbereich bisher ausgeschlossen.

Der Erfindung liegt deshalb die Aufgabe ein Verfahren aufzuzeigen, mit dem eine wirksame, mechanisch stabile, haftfeste Schutzschicht aus keramischem Material, hergestellt werden kann, die auch in einer korrosiven Hochtemperaturatmosphäre dauerhaft beständig ist.

Diese Aufgabe wird erfindungsgemäß durch die kennzeichnenden Merkmale des Patentanspruches 1 gelöst.

Die erfindungsgemäße keramische Schutzschicht ist dann stabil mit dem zu schützenden Bauteil verbunden und auch in einer korrosiven Hochtemperaturatmosphäre beständig, wenn sie nicht auf das Grundmaterial des zu beschichtenden Bauteils aufgeschmolzen, sondern das zu ihrer Bildung verwendete keramische Pulver durch druckloses Sintern oder heißisostatisches Pressen mit dem Grundmaterial des zu beschichtenden Bauteils direkt oder über einen Haftvermittler mit diesem verbunden wird und die Verbindung der Teilchen des keramischen Materials in gleicher Weise erfolgt. Für die Ausbildung der Schutzschicht sind insbesondere feine keramische Pulver geeignet, z.B. solche die durch Alaunzersetzung, Sprühzersetzung, Flammenpyrolyse, Gefriertrocknen, durch Sol-Gel-Prozesse oder einen Lichtbogenprozeß hergestellt werden. Das Größenverhältnis der größten Pulverteilchen zu den kleinsten Pulverteilchen soll kleiner als 20 und das Größenverhältnis der größten Teilchen zu den mittleren Teilchen sollte kleiner als 4 sein. Die mittlere Teilchengröße des Pulvers ist zwischen 0,2 und 5µm zu wählen. Das keramische Pulver kann naß oder trocken auf das Grundmaterial des zu beschichtenden Bauteils aufgetragen werden. Bevorzugt wird das Pulver aus einer Suspension mit Wasser oder organischen Flüssigkeiten wie Methanol oder anderer Alkoholen, Hexan oder anderen Alkanen, Toluol oder anderen Aromaten als Dispersionsmittel auf das Bauteil aufgebracht.

Die Abscheidung der Schicht kann durch ein- oder mehrfaches Eintauchen des zu schützenden Bauteils in die Suspension, durch Aufsprühen der Suspension auf das Bauteil oder durch elektrophoretische Abscheidung aus der Suspension auf das in die Suspension getauchte Bauteil erfolgen.

Das oben charakterisierte Pulver gewährleistet zusammen mit den genannten Auftragungsverfahren, daß zur Herstellung einer stabilen Schicht mit den gewünschten Eigenschaften hinsichtlich Porosität, Wärmeleitfähigkeit, Thermoschockbeständigkeit. Phasenbestand u.ä. kein Aufschmelzen der Pulverteilchen erforderlich ist, ja daß sogar ein Verdichtung und Verfestigung der Schicht bei Temperaturen unterhalb 1200 °C erfolgen kann, so daß keine übermäßige Belastung für das zu schützende Bauteil eintritt. Dadurch wird gleichzeitig erreicht, daß keramische Werkstoffe wie Zirkoniumoxid ($ZrO_2$) oder Zirkon ($ZrSiO_4$) für Schutzschichten verfügbar werden, die ansonsten wegen störender Phasenumwandlungen bei Temperaturen zwischen 1200 °C und ihrem Schmelzpunkt nicht zuverlässig einsetzbar wären. Zudem kann auf die Zugabe korrosionsanfälliger Stabilisatoren, wie $Y_2O_3$, $MgO$, $CaO$ im Falle des $ZrO_2$, zur Stabilisierung einer Hochtemperaturphase verzichetet werden.

Weitere erfindungswesentliche Merkmale sind in den Unteransprüchen gekennzeichnet.

Die Erfindung wird nachfolgend anhand einer Zeichnung erläutert:

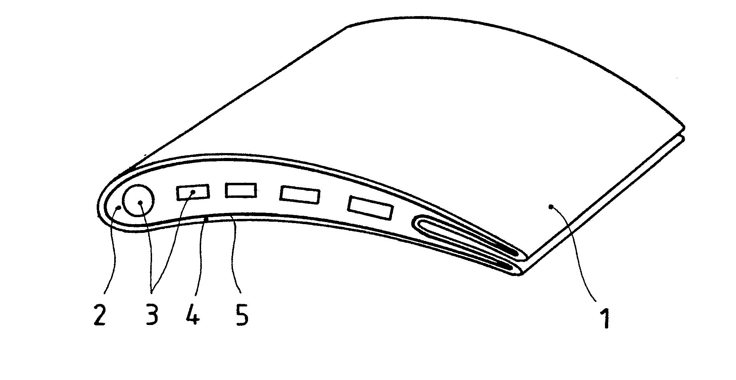

Die einzige Figur zeigt ein Bauteil 1 einer Turbine, das ständig der Einwirkung von heißen Gasen ausgesetzt ist. Das Bauteil 1 wird durch einen Grundkörper 2 gebildet, der von Kühlkanälen 3 durchsetzt ist. Der Grundkörper 2 ist aus einem austenitischen Werkstoff hergestellt und zum Schutz vor den Einwirkungen der korrosiven Bestandteile der heißen Gase mit der erfindungsgemäßen Schutzschicht 4 überzogen. Bei dem hier dargestellten Ausführungsbeispiel eines beschichteten Bauteils 1 ist zwischen den Grundkörper 2 und der keramischen Schutzschicht 4 ein metallischer Haftvermittler 5 angeordnet. Für die Herstellung der keramischen Schutzschicht wird der Grundkörper 2 auf seiner zu beschichtenden Oberfläche zunächt mechanisch gereinigt. Anschließend wird, falls es die Gegebenheiten erfordern, der mechanische Haftvermittler 5 durch Plasmaspritzen aufgebracht. Die keramische Schutzschicht 4 wird dann auf die Oberfläche des Haftvermittlers 5 oder direkt auf die gereinigte Oberfläche des Grundkörpers 2 aufgebracht. Das die kera mische Schutzschicht bildende Pulver kann naß oder trokken aufgetragen werden. Wird das die keramische Schutzschicht bildende Pulver naß auf den Grundkörper 2 aufgetragen, so erfolgt dies aus einer Suspension mit Wasser oder organischen Flüssigkeiten, wie Methanol oder anderen Alkoholen, Hexan oder anderen Alkanen, Toluol oder anderen Aromaten als Dispersionsmittel. Als mögliches Verfahren zum nassen Auftragen des Pulvers kommt das mehrfache Eintauchen des gesamten Grundkörpers in die Suspension in Frage. Das Auftragen der Suspension kann auch durch Aufsprühen oder durch elektrophoretische Abscheidung erfolgen. Dieses Verfahren wird bevorzugt angewendet, da hiermit eine gleichmäßige Abscheidung des keramischen Materials, insbesondere des Pulvers möglich ist. Soll das keramische Material 4 nur als Schutzschicht dienen, so wird es vorzugsweise in einer Dicke zwischen 0,1 und 2 µm aufgetragen. Übernimmt die Schutzschicht 4 gleichzeitig die Funktion einer Wärmedämmung, so kann das keramische Material bis zu einer Dicke von 1 mm auf den Grundkörper 2 bzw. auf den metallischen Haftvermittler 5 aufgebracht werden.

Die stabile Verbindung der Pulverteilchen untereinander sowie ihre Verbindung mit dem Grundkörper bzw. dem metallischen Haftvermittler erfolgt durch drucklose Sinterung oder durch heißisostatisches Pressen. Das keramische Pulver kann zu einer dauerhaften festen Schicht mit der jeweils gewünschten Porosität gesintert werden, wo-für Temperaturen erforderlich sind, die weit unterhalb des Schmelzpunktes des keramischen Materials liegen. Mit einem keramischen Pulver, das durch Alaunzersetzung, Sprühzersetzung, Flammenpyrolyse, Gefriertrocknung, durch Sol-Gel-Prozesse oder einem Lichtbogenprozeß hergestellt ist, lassen sich gasdichte Schichten bei einer Sintertemperatur von nur 1100 °C herstellten. Bei dieser Temperatur wird der zu beschichtende Grundkörper 2 noch keiner übermäßig hohen Belastung ausgesetzt, so daß eine Beschädigung hierdurch nicht zu befürchten ist. Als geeignetes keramisches Pulver wird vorzugsweise Aluminiumoxid($Al_2O_3$) oder ein Gemisch aus Aluminiumoxid ($AL_3O_3$) und Titanoxid ($TiO_2$) verwendet. Gute Schutzschichten lassen sich auch durch die Verwendung von reinem Zirkoniumoxid ($ZrO_2$) oder einem Gemisch bestehend aus Zirkonoxid ($ZrO_2$) und Siliziumoxid ($SiO_2$) herstellen.

**Patentansprüche**

1. Verfahren zur Herstellung einer Schutzschicht aus keramischem Material für Bauteile (1) aus metallischen oder nichtmetallischen Werkstoffen, dadurch gekennzeichnet, daß das keramische Material in Form eines Pulvers verwendet wird, dessen Teilchen in wenigstens drei Größen vorliegen und das Größenverhältnis der größten Teilchen zu den kleinsten Teilchen kleiner als 20 und das Größenverhältnis der größten Teilchen zu den mittleren Teilchen kleiner als 4 gewählt wird, und daß das keramische Material trocken oder naß auf das Bauteil (1) aufgetragen und die Teilchen untereinander und mit dem Bauteil (1) bei einer vorgebbaren Temperatur durch druckloses Sintern oder heißisostatisches Pressen verbunden werden.

2. Verfahren nach Anspruch 1, dadurch gekennzeichnet, daß das keramische Material zur Erlangung einer haftfesten Verbindung der Teilchen untereinander und mit dem Bauteil (1) sowie zur Einstellung eines gewünschten Gefüges bei einer Temperatur zwischen 1100 ° und 1200 °C durch druckloses Sintern oder heißisostatisches Pressen miteinander und mit dem Bauteil (1) verbunden wird.

3. Verfahren nach einem der Ansprüche 1 oder 2, dadurch gekennzeichnet, daß das keramische Material unter Zwischenfügen eines metallischen Haftvermittlers (5) auf den Grundkörper (2) eines Bauteils (1) aufgetragen wird.

4. Verfahren nach einem der Ansprüche 1 bis 3, dadurch gekennzeichnet, daß das keramische pulverförmige Material so gewählt wird, daß seine größten Teilchen kleiner als 20 µm, seine mittleren Teilchen zwischen 0,2 und 5 µm und seine kleinsten Teilchen größer als 0,1 µm sind.

5. Verfahren nach einem der Ansprüche 1 bis 3, dadurch gekennzeichnet, daß für die Beschichtung ein pulverförmiges keramisches Material verwendet wird, das mehr als 40 % Aluminiumoxid (Al$_2$O$_3$) oder Zirkoniumoxid (ZrO$_2$), ein Gemisch aus Aluminiumoxid (Al$_2$O$_3$) und Titanoxid (TiO$_2$) oder ein Gemisch aus Zirkoniumoxid (ZrO$_2$) und Siliziumoxid (SiO$_2$) enthält.

6. Verfahren nach einem der Ansprüche 1 bis 4, dadurch gekennzeichnet, daß das pulverförmige keramische Material aus einer Suspension mit Wasser, Methanol, Hexan, Toluol oder einem anderen organischen Lösungsmittel als Dispersionsmittel auf das zu beschichtende Bauteil (1) aufgetragen wird.

7. Verfahren nach einem der Ansprüche 1 bis 6, dadurch gekennzeichnet, daß das pulverförmige keramische Material (4) in einer Dicke von 0,1 µm und mehr als 1 mm auf das Bauteil (1) aufgetragen wird.

8. Verfahren nach einem der Ansprüche 1 bis 7, dadurch gekennzeichnet, daß das in einer Suspension enthaltene keramische pulverförmige Material durch Tauchen, Sprühen oder einer elektrophoretischen Abscheidung auf das Bauteil (1) aufgetragen wird.

9. Schutzschicht aus einem keramischen Material für Bauteile (1) aus metallischen oder nichtmetallischen Werkstoffen, dadurch gekennzeichnet, daß das keramische Material ein Pulver ist, dessen Teilchen wenigstens drei unterschiedliche Größen aufweisen, daß die größten Teilchen kleiner als 20µm, die mittleren Teilchen zwischen 0,2 und 5 µm und die kleinsten Teilchen größer als 0,1 µm sind, und daß die Teilchen miteinander und mit dem Werkstoff des Bauteils (1) bei einer Temperatur zwischen 1100 und 1200 °C durch druckloses Sintern oder heißisostatisches Pressen verbindbar sind.

0230976